# EUROPEAN PATENT APPLICATION

(11) **EP 1 427 255 A2**
(43) Date of publication of application: **09.06.2004**
(21) Application number: 03075938.5
(22) Date of filing: 01.04.2003
(51) Int. Cl.: H05B 3/28, H05B 3/26

(54) **Modular electric heating tile and its installation**

(30) Priority: 04.12.2002 CN 02153538
(71) Applicant: Yue, Steven, Taipei City (TW)
(72) Inventor: Yue, Steven, Taipei City (TW)
(74) Representative: SERJEANTS

(57) **Abstract**

A modular electric heating tile 1 includes a tile body 11 and an electric heating unit. The tile body 11 is made of a material selected from a group consisting of clay and cement, and has two opposite first and second surfaces 14, 15. The electric heating unit is mounted on the tile body 11 adjacent to the first surface 14 in an enveloped manner.

## Description

The invention relates to a tile, more particularly to a modular electric heating tile and its installation method.

A conventional boiler-type heating system provides a central boiler within the boundary of a district. Water is heated in the central boiler and distributed through underground pipes to each household in the district, after which water circulates back to the boiler for reheating, thereby achieving its purpose. However, since the underground pipes are interconnected, when one of the pipes breaks down or when heating supply to a household is to be disrupted due to non-payment of bills, stoppage of heat supply cannot be applied to only a single household, thereby rendering the conventional boiler-type heating system inconvenient to manage. Furthermore, the conventional boiler-type heating systemneeds, aside from the central boiler, thepresence of a controller. Moreover, when leakage occurs on the pipes, repair and maintenance are rather difficult to conduct.

Thus, another conventional single household electric-heating system has been proposed to overcome the aforesaid drawbacks. In this system, an electric heating wire is initially arranged on the floor, after which a layer of cement is paved on the floor to cover the electric heating wire. Floor tiles are then mounted on the cement layer. The electric heating wire is connected to a power source, thereby completing the electric-heating system. In the conventional electric-heating system, a single room or residence can be applied with one system, a central boiler is not required, and underground pipes are not needed so that a controller is not required. Furthermore, leakage problems are not encountered, repair is simpler, and temperature can be independently controlled. However, since the conventional electric-heating system is constructed on the spot, the steps for installation are complicated so that a lot of time is wasted, which in turn, increases installation costs.

Therefore, the object of the present invention is to provide a modular electric heating tile and its installation method so as to overcome the aforementioned drawbacks of the prior art.

According to one aspect of the present invention, a modular electric heating tile comprises a tile body and an electric heating unit. The tile body is made of a material selected from a group consisting of clay and cement, and has two opposite first and second surfaces. The electric heating unit is mounted on the tile body adjacent to the first surface in an enveloped manner.

According to another aspect of the present invention, a floor heating system comprises a plurality of tile bodies arranged in a side-by-side adjacent relationship, a plurality of electric heating units mounted respectively on the tile bodies, a plurality of first connectors, a plurality of second connectors for mating respectively with the first connectors, and a power line connected to the second connectors. Each of the tile bodies is made of a material selected from a group consisting of clay and cement, and has two opposite first and second surfaces, and a cavity formed between the first and second surfaces. Each of the first connectors is received in the cavity of a corresponding one of the tile bodies, and is connected electrically to one of the heating units.

According to yet another aspect of the present invention, an installation method of a modular electric heating tile includes arranging a plurality of electric heating tiles on a planar surface. Each of the electric heating tiles is mounted with an electric heating unit. The electric heating units of the electric heating tiles are then connected electrically and respectively to a power source through a power line so as to supply electricity to the electric heating units.

Other features and advantages of the present inventionwill become apparent in the following detailed description of the preferred embodiment with reference to the accompanying drawings, of which:
Figure 1 is a perspective view of the preferred embodiment of a modular electric heating unit according to the present invention;
Figure 2 is a fragmentary perspective view of the preferred embodiment, illustrating a plug connector thereof;
Figure 3 is a perspective view of an electric heating unit of the preferred embodiment;
Figure 4 illustrates the fabrication of a tile body of the preferred embodiment;
Figure 5 is a fragmentary perspective view of a resistance heating wire of the electric heating unit of the preferred embodiment;
Figure 6 illustrates a floor heating system of the present invention;
Figure 7 is an enlarged perspective view to illustrate a socket connector on a power line;
Figure 8 illustrates electrical connection among the socket connectors of the power line;
Figure 9 is a circuit diagram to illustrate a preferred electrical connection between electric heating tiles;
Figure 10 is a view substantially similar to Figure 8, but additionally including a diode;
Figure 11 is a view substantially similar to Figure 8, but with the socket connectors being connected in a different manner;
Figure 12 is a circuit diagram to illustrate another preferred electrical connection between electric heating tiles using the connectors shown in Figure 11; and
Figure 13 is a view substantially similar to Figure 11, but additionally including a diode.

Before the present invention is described in greater detail, it should be noted that like elements are denoted by the same reference numerals throughout the disclosure.

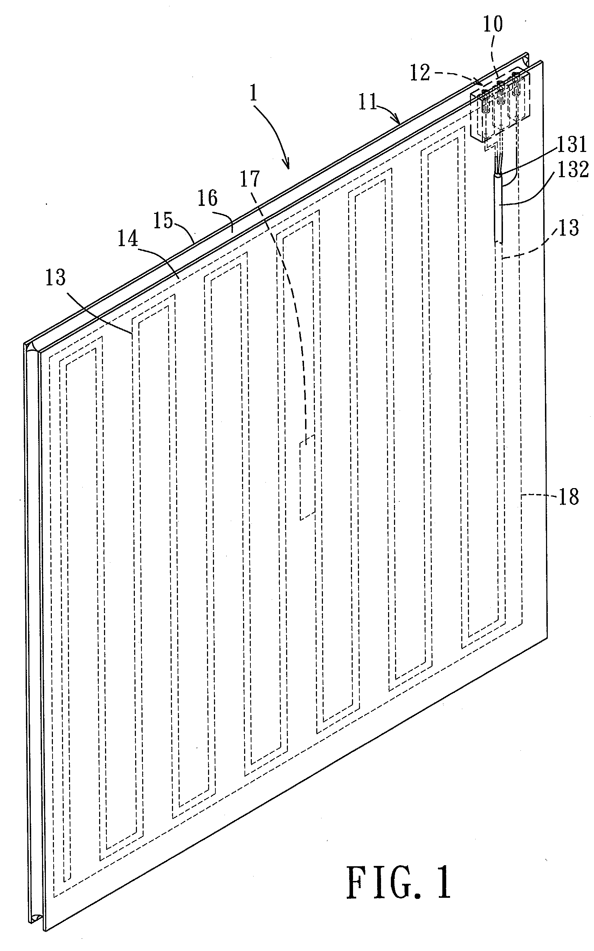

Referring to Figures 1 to 7, the preferred embodiment of a modular electric heating tile 1 of this invention comprises a tile body 11, and an electric heating unit.

The tile body 11 is made of a material selected from a group consisting of clay and cement. In this embodiment, the tile body 11 is a cement tile, and includes two opposite first and second surfaces 14, 15, a cavity 10, a first connector received in the cavity 10, and a peripheral groove 16 formed between the first and second surfaces 14, 15 and communicating with the cavity 10.

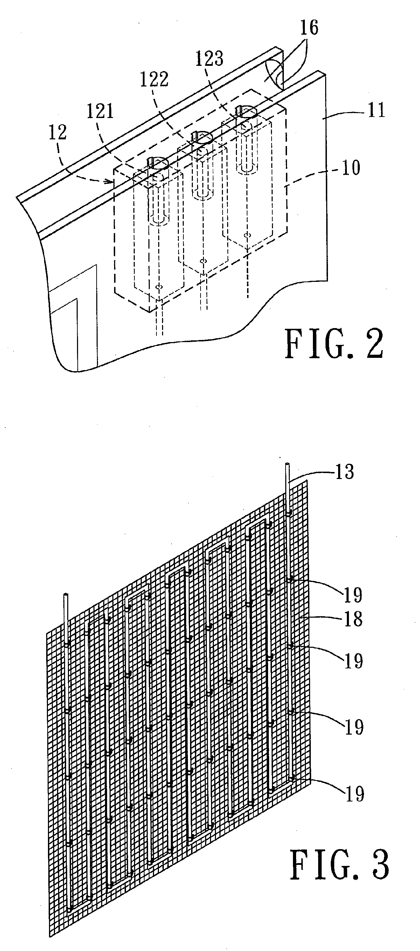

The first connector, in this embodiment, is a plug connector 12, and is embedded in the cavity 10. The plug connector 12 includes three spaced-apart first, second, and third terminals 121, 122, 123 (see Figure 2).

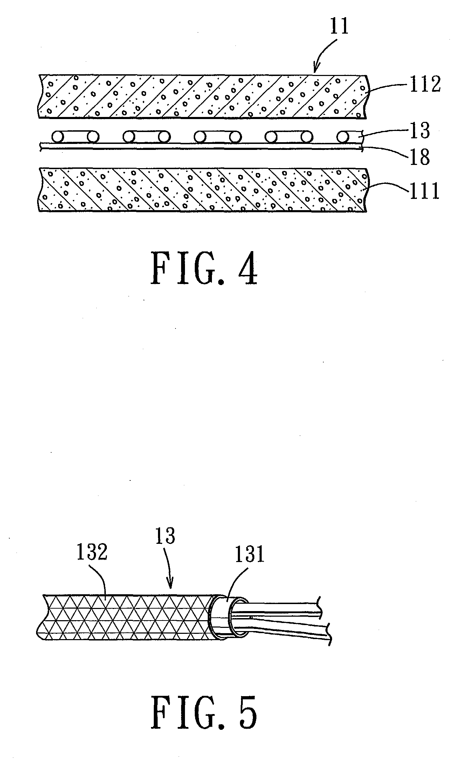

The electric heating unit is embedded in the tile body 11 adjacent to the first surface 14 in an enveloped manner, and is connected electrically to the first connector. The electric heating unit includes a flexible substrate 18 (see Figure 3), such as a netted web, attached to the tile body 11, and a resistance heating wire 13 (seeFigure3) laidonandattachedtotheflexible substrate 18 by means of a plurality of fasteners 19. The flexible substrate 18 (see Figure 4) is embedded within the tile body 11 adjacent to the first surface 14. The resistance heating wire 13 extends continuously on the substrate 18 by turning successively and alternately in two opposite directions to form a plurality of parallel wire sections, and includes an insulated covering 131 (see Figure 5) and a metallic shielding net 132 (see Figure 5) covering the insulated covering 131. The first and second terminals 121, 122 of the plug connector 12 are connected electrically and respectively to two ends of the resistance heating wire 13, whereas the third terminal 123 of the plug connector 12 is connected electrically to the metallic shielding net 132.

The tile body 11 is formed with a base layer 111 (see Figure 4) and a covering layer 112 (see Figure 4). The substrate 18 with the resistance heating wire 13 is laid on the base layer 111, and is covered by the covering layer 112, which is a cement layer.

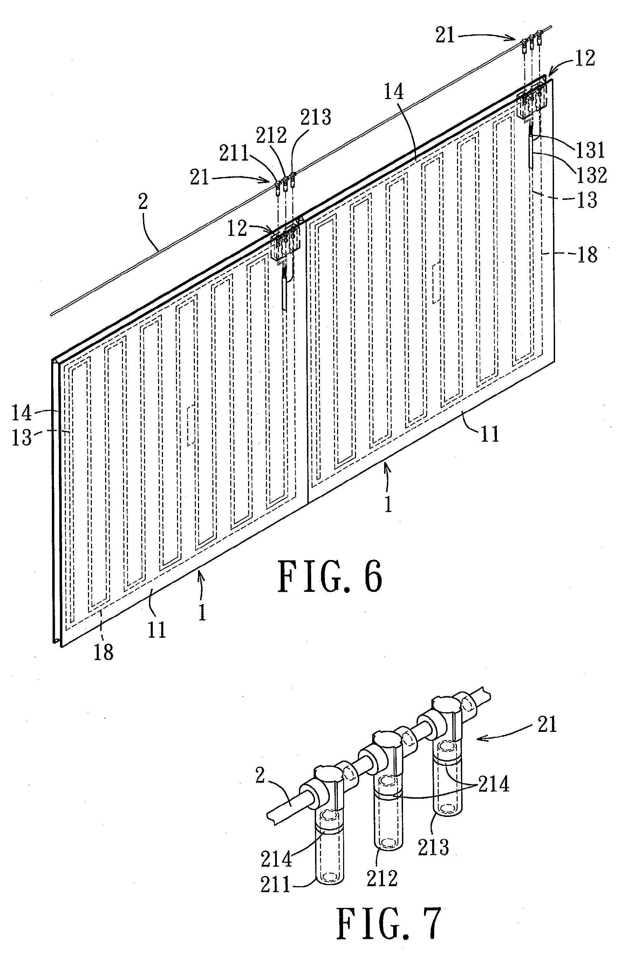

The electric heating tile 1 further includes a second connector to mate with the first connector, and a power line 2 (see Figure 6) connected to the second connector and adapted for electrical connection with a power source. The peripheral groove 16 in the tile body 11 receives the second connector and the power line 2. The second connector, in this embodiment, is a socket connector 21 (see Figures 6 and 7). The socket connector 21 includes three spaced-apart first, second, and third terminals 211, 212, 213, which engage respectively the first, second, and third terminals 121, 122, 123 of the plug connector 12. The first, second, and third terminals 211, 212, 213 of the socket connector 21 are respectively provided with a waterproof gasket 214 so that the power line 2 is waterproof and has no current leakage.

Referring once again to Figure 6, a plurality of tile bodies 11 (only two are shown) are arranged in a side-by-side adjacent relationship to form a floor heating system. The plug connectors 12 and the socket connectors 21 are then interconnected so that the power line 2 can be embedded in the grooves 16 of the adjacent tile bodies 11. As such, the power line 2 can interconnect easily and electrically the electric heating tiles 1. To facilitate control of temperature, the electric heating tile 1 may be installed with a temperature-control unit 17 (see Figure 1) to permit the user to adjust the temperature accordingly.

It should be noted that the socket connectors 21 are detachably connected to the power line 2, and thus are removed from the power line 2 in an unused state. Moreover, when installation of the electric heating tile 1 is desired, the specification of the power line to be used depends upon the supplied power source and the installation site.

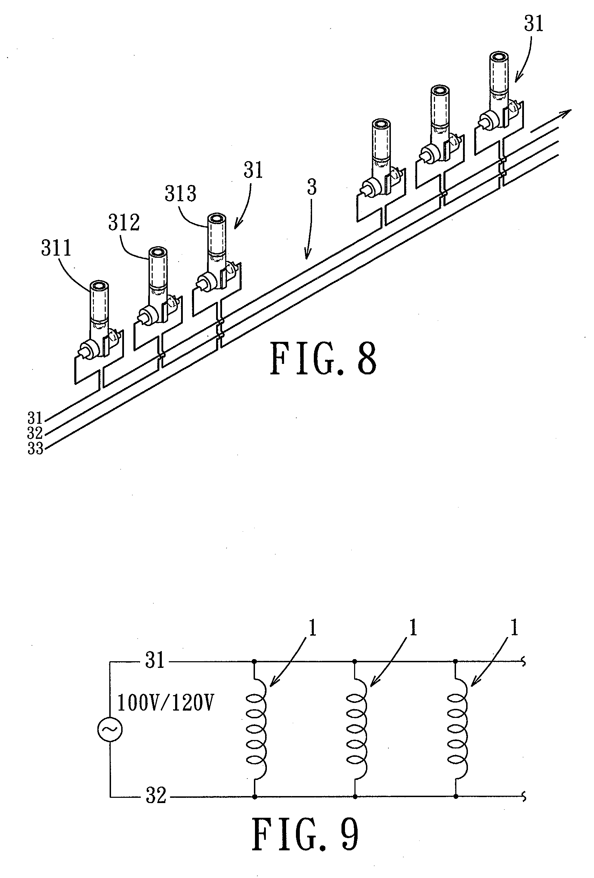

Referring to Figure 8, when the supplied power source is 100 or 120 volts, and when the electric heating tiles 1 are to be installed outdoors, each socket connector 31 on a power line 3 has a first terminal 311 connected electrically to a first terminal line 31, a second terminal 312 connected electrically to a second terminal line 32, and a third terminal 313 connected electrically to a third terminal line 33, after which the plug connectors 12 (see Figures 1 and 2) and the socket connectors 31 are interconnected respectively. The electrical circuit formed is as shown in Figure 9, wherein the electric heating tiles 1 are coupled electrically in parallel to the power source 100v/120v. Each piece of the electric heating tiles 1 consumes about 30w/100v or 20w/120v. Based on the dimension of 30cm x 30cm of a piece of the electric heating tiles 1, each square meter of electric heating tiles 1 can consume 330w/100v or 220w/120v, which in turn can supply a temperature of 45°C.

Referring once again to Figures 2 and 5, since the metallic shielding net 132 is connected electrically to the third terminal 123 of the plug connector 12, the resistance heating wire 13 can be connected to the ground to prevent current leakage. The metallic shielding net 132 acts as an electromagnetic shield that prevents electromagnetic radiation of the resistance heating wire 13, thereby effectively protecting human body from harm.

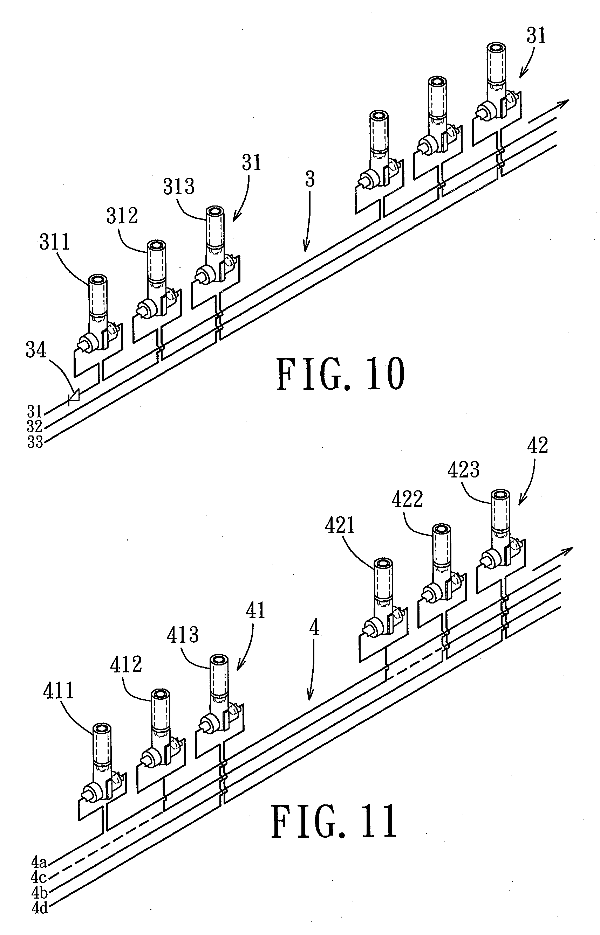

Referring to Figure 10, when a similar power source of 100 or 120 volts is supplied, but the electric heating tiles 1 are to be installed indoors, because the temperature required need not be as high as that of outdoor installation, a diode 34 can be added to the first terminal line 31 of the power line 3 to proceed with a half-wave rectification, thereby reducing wattage consumption of the electric heating tiles 1 by one-half, and thereby supplying a temperature of about 29∼30°C.

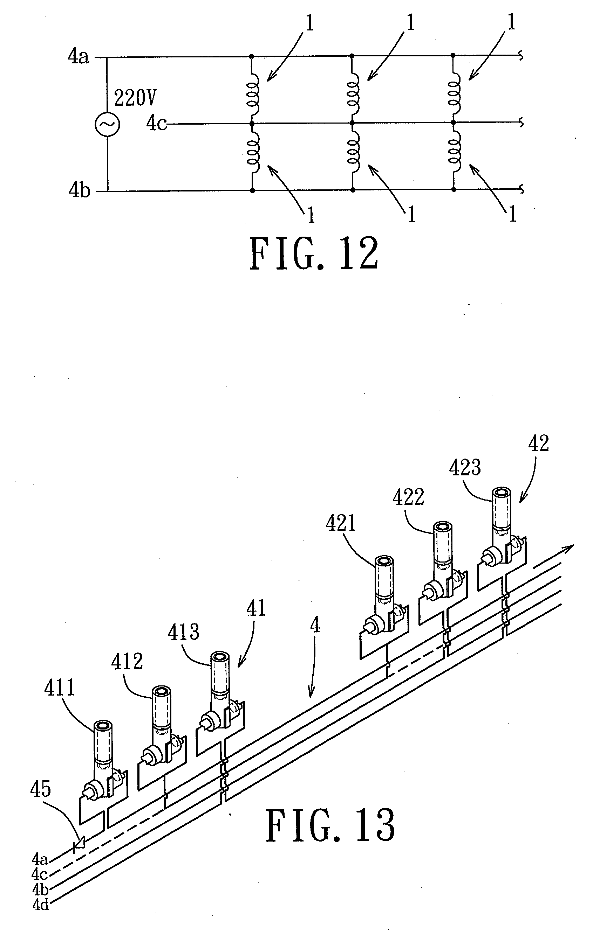

Referring to Figure 11, when the suppliedpower source is 220 volts and the electric heating tiles 1 are to be installed outdoors, apowerline4preferablyincludes a first terminal line 4a, a second terminal line 4b, a common connecting terminal line 4c, and a third terminal line 4d. Socket connectors on the power line 4 are divided into a first socket connector 41 and a second socket connector 42, which are spaced apart from each other. The first socket connector 41 has a first terminal 411 connected electrically to the first terminal line 4a, a second terminal 412 connected electrically to the common connecting terminal line 4c, and a third terminal 413 connected electrically to the third terminal line 4d. The second socket connector 42 has a first terminal 421 connected electrically to the common connecting terminal line 4c, a second terminal 422 connected electrically to the second terminal line 4b, and a third terminal 423 connected electrically to the third terminal line 4d. Thus, after the plug connectors 12 (see Figures 1 and 2) of the electric heating tiles 1 are connected respectively to the first and second socket connectors 41, 42 of the power line 4, the electrical circuit formed is as shown in Figure 12, wherein the electric heating tiles 1 in a group are first connected in parallel, after which the groups are connected in series to the power source 220v. Two electric heating tiles 1 are used to share the power source voltage so that the voltage load of the resistance heating wire 13 (see Figure 1) of each of the electric heating tiles 1 can be reduced, thereby preventing burning of the resistance heating wires 13 due to overheating. As such, each electric heating tile 1 can consume about 25 watts of electric power. Based on the dimension of 30 cm x 30 cm of apieceof the electric heating tiles 1, each square meter of the electric heating tiles 1 can consume 275 watts.

Similarly, when the suppliedpower source is 220 volts, but the electric heating tiles 1 are to be installed indoors, a diode 45, as shown in Figure 13, can be added to the first socket connector 41 or the second socket connector 42 of the power line 4 to proceed with a half-wave rectification, thereby reducing wattage consumption of the electric heating tiles 1 by one-half. In this embodiment, the diode 45 is added to the first socket connector 41 of the power line 4.

From the above description of the preferred embodiment, it is apparent that when installing the electric heating tiles 1 of the present invention, the tiles 1 are directly placed one by one on the floor. Then, based on the supplied power source and the installation site, a suitable power line is selected to interconnect electrically the electric heating tiles 1. Afterwards, floor tiles (not shown) can be paved respectively on the first surfaces 14 of the electric heating tiles 1 to complete the installation of the floor heating system of the present invention. In fact, a floor tile can be initially paved on the first surface 14 of the electric heating tile 1 so as to form an electric heating floor tile, after which the electric heating floor tiles are paved one by one on the floor, thereby reducing the steps and time of installation and simplifying preparation of materials.

Therefore, the advantages of the preferred embodiment of the modular electric heating tile 1 and its installation method according to this invention can be summarized as follows:
1. The electric heating tile 1 is very simple and easy to install so that installation time is reduced, which is only about one-tenth of that of the conventional heating system.
2. Since the electric heating tile 1 is pre-assembled with the resistance heating wire 13, and since the dimension thereof is identical to that of an ordinary floor tile, which is 30cm x 30cm, the electric heating tile 1 is modularized and standardized. Thus, the electric heating tiles 1 can be installed on the floor in a conventional manner and can be mass-produced, thereby lowering the cost as compared to that of the conventional single household electric-heating system.
3. Since the electric heating tile 1 is standardized, it is very easy to acquire and produce the power line 2, 3, 4.
4. Since the resistance heating wire 13 is covered with a metallic shielding net 132, which is adapted to be grounded, the current leakage and the electromagnetic radiation of the resistance heating wire 13 are minimi zed so that health of the human body can be protected.
5. The power line 2, 3, 4 used in the electric heating tile 1 has met the Underwriter Laboratories (UL) standards so that it is relatively safe and reliable to use.

## Claims

1. A modular electric heating tile (1) **characterized by**:
a tile body (11) made of a material selected from a group consisting of clay and cement, said tile body (11) having two opposite first and second surfaces (14,15); and
an electric heating unit mounted on said tile body (11) adjacent to said first surface (14) in an enveloped manner.

2. The modular electric heating tile (1) as claimed in claim 1, **characterized in that** said electric heating unit is embedded in said tile body (11) adjacent to said first surface (14).

3. The modular electric heating tile (1) as claimed in Claim 1 or Claim 2, further **characterized in that** said tile body (11) further includes a cavity (10) and a first connector received in said cavity (10) and connected electrically to said electric heating unit.

4. The modular electric heating tile (1) as claimed in Claim 3, further **characterized by** a second connector to mate with said first connector, and a power line (2) connected to said second connector and adapted for connection with a power source.

5. The modular electric heating tile (1) as claimed in Claim 4, further **characterized in that** said tile body (11) further includes a peripheral groove (16) formed between said first and second surfaces (14, 15) around said tile body (11), said cavity (10) being communicated with said peripheral groove (16).

6. The modular electric heating tile (1) as claimed in Claim 5, further **characterized in that** said peripheral groove (16) receives said second connector and said power line (2).

7. The modular electric heating tile (1) as claimed in any of Claims 4 to 6, further **characterized in that** said first connector is a plug connector (12), and said second connector is a socket connector (21).

8. The modular electric heating tile (1) as claimed in any of Claims 4 to 7, further **characterized in that** said electric heating unit includes a flexible substrate (18) attached to said tile body (11), and a resistance heating wire (13) laid on and attached to said flexible substrate (18).

9. The modular electric heating tile (1) as claimed in Claim 8, further **characterized in that** said flexible substrate (18) is embedded within said tile body (11) adjacent to said first surface (14).

10. The modular electric heating tile (1) as claimed in Claim 8 or Claim 9, further **characterized in that** said resistance heating wire (13) extends continuously on said substrate (18) by turning successively and alternately in two opposite directions to form a plurality of parallel wire sections.

11. The modular electric heating tile (1) as claimed in any of Claims 8 to 10, further **characterized in that** said resistance heating wire (13) includes an insulated covering (131) and a metallic shielding net (132) covering said insulated covering (131).

12. The modular electric heating tile (1) as claimed in Claim 11, further **characterized in that** said first connector includes first, second and third terminals (121, 122, 123), said first and second terminals (121, 122) being connected respectively to two ends of said resistance heating wire (13), said third terminal (123) being connected to said metallic shielding net (132).

13. The modular electric heating tile (1) as claimed in any of Claims 8 to 12, further **characterized in that** said tile body (11) is formed with a base layer (111) and a covering layer (112), and said substrate (18) with said resistance heating wire (13) being laid on said base layer (111) and covered by said covering layer (112).

14. A floor heating system **characterized by**:
a plurality of tile bodies (11) arranged in a side-by-side adjacent relationship, each of said tile bodies (11) being made of a material selected from a group consisting of clay and cement and having two opposite first and second surfaces (14, 15), and a cavity (10) formed between said first and second surfaces (14, 15);
a plurality of electric heating units mounted respectively on said tile bodies (11);
a plurality of first connectors each received in said cavity (10) of a corresponding one of said tile bodies (11) and connected electrically to one of said heating units;
a plurality of second connectors for mating respectively with said first connectors; and
a power line (2) connected to said second connectors.

15. The floor heating system as claimed in Claim 14, further **characterized in that** each of said tile bodies (11) further includes a peripheral groove (16) formed between said first and second surfaces (14, 15) around each of said tile bodies (11), said power line (2) and said second connectors being received in said peripheral grooves (16) in said tile bodies (11).

16. The floor heating system as claimed in Claim 14, or Claim 15, further **characterized in that** said first connectors are plug connectors (12), and said second connectors are socket connectors (21).

17. The floor heating system as claimed in any of Claims 14 to 16 further **characterized in that** said second connectors are connected in parallel.

18. The floor heating system as claimed in any of Claims 14 to 16, further **characterized in that** said second connectors are arranged in a plurality of groups, which are interconnected in series, each of said groups including a plurality of said second connectors which are connected in parallel.

19. An installation method of a modular electric heating tile (1), **characterized by**:
arranging a plurality of electric tiles (1) on a planar surface, each of said electric heating tiles (1) being mounted with an electric heating unit; and
connecting electrically and respectively said electric heating units of said electric heating tiles (1) to a power source through a power line (2) so as to supply electricity to said electric heating units.
